# DEMANDE DE BREVET EUROPEEN

(11) **EP 4 575 659 A1**
(43) Date de publication de la demande: **25.06.2025**
(21) Numéro de dépôt: 23218858.1
(22) Date de dépôt: 20.12.2023
(51) Int. Cl.: G04B 5/16, B05D 1/12, B05D 5/06, B05D 7/00, G04B 19/04, G04B 19/12, G04B 29/02, G04B 45/00, B05D 5/02

(54) **PROCÉDÉ DE DÉPÔT SUR UN SUBSTRAT D'UN REVÊTEMENT ABSORBANT AU MOINS PARTIELLEMENT LA LUMIÈRE VISIBLE**

(71) Demandeur: The Swatch Group Research and Development Ltd, 2074 Marin (CH)
(72) Inventeur: FRANÇOIS, Nicolas, 2000 Neuchâtel (CH); TERES, Nathalie, 2014 Bôle (CH)
(74) Mandataire: ICB SA

(57) **Abrégé**

Un aspect de l'invention concerne un procédé de dépôt (100) sur un substrat (1) d'un revêtement (20) absorbant au moins partiellement la lumière visible pour la formation d'un article (10), tel qu'un composant horloger, ledit procédé de dépôt (100) étant caractérisé en ce qu'il comporte : une première étape (110) de fourniture d'un substrat (1) ; une deuxième étape (120) de dépôt d'une première couche (21) recouvrant au moins une portion du substrat (1) par l'application d'un premier mélange liquide comportant un liant, un solvant et des pigments d'une taille moyenne (d90) de dimension nanométrique, la première couche (21) étant formée par évaporation dudit solvant; une troisième étape (130) de dépôt d'une deuxième couche (22) recouvrant une première portion de la première couche (21) par l'application d'un deuxième mélange liquide comportant un liant, un solvant et des pigments dont la taille moyenne (d90) est supérieure à la taille moyenne (d90) des pigments de la première couche (21), la deuxième couche (22) étant formée par évaporation dudit solvant ; une quatrième étape (140) de dépôt d'une troisième couche (23) recouvrant une deuxième portion de la première couche (21), différente de la première portion recouverte par la deuxième couche (23), par l'application d'un troisième mélange liquide comportant un liant, un solvant et des pigments dont la taille moyenne (d90) est supérieure à la taille moyenne (d90) des pigments de la deuxième couche (22), la troisième couche (23) étant formée par évaporation dudit solvant.

## Description

### Domaine technique de l'invention

Le domaine de l'invention concerne les traitements de surface d'articles, tels que des articles décoratifs ou des composants horlogers.

L'invention concerne plus particulièrement un procédé de dépôt d'un revêtement décoratif qui a pour caractéristique optique d'absorber la lumière visible.

L'invention concerne également un article, par exemple un composant horloger, revêtu par un tel revêtement décoratif absorbant la lumière visible.

L'invention trouve une application particulièrement intéressante dans le domaine de l'horlogerie, pour la décoration d'articles ou de composants utilisés dans les pièces d'horlogerie, par exemple les platines, les ponts, les rouages, les vis, les masses oscillantes, les cadrans, les index, les appliques, les disques de guichets, les aiguilles ou encore tout autre composant du mouvement ou de l'habillage externe d'une pièce horlogerie.

### Arrière-plan technologique

Il existe des revêtements absorbants la lumière visible et qui présente une absorption de la lumière supérieure à 99,8%.

On connait notamment le revêtement Vantablack^{®} à base de nanotubes de carbone orientés perpendiculairement à la surface du substrat et serrés les uns contre les autres. Un tel revêtement confère une couleur noire avec un coefficient d'absorption de 99,965% de la lumière visible.

Toutefois, un tel revêtement à base de nanotubes de carbone est très onéreux et présente des risques pour la santé, ces particules étant reconnues comme cancérigènes, mutagènes ou reprotoxiques.

Il est également connu la peinture acrylique Musou^{®} plus facile à utiliser et à appliquer et qui présente une absorption jusqu'à 99,4% de la lumière visible et une composante de clarté L* proche de 10. Toutefois, ce revêtement présente la particularité d'être très fragile et un contact léger avec le revêtement peu facilement occasionner un pelage du revêtement ou une dégradation de son absorption. Il est par exemple très compliqué de nettoyer ce type de revêtement sans dégrader son aspect esthétique, si une poussière ou une fibre s'y est déposée. Une telle peinture n'est pas aisément applicable par exemple dans le domaine horloger.

Par conséquent, il existe un besoin d'amélioration de ces revêtements absorbants la lumière visible permettant leur utilisation sur des articles qui peuvent être manipulés, par exemple des composants horlogers, sans risque pour la santé et sans risque d'une dégradation du revêtement par simple contact ou manipulation de l'article.

### Résumé de l'invention

Dans ce contexte, l'invention vise à proposer un article comportant un revêtement présentant au moins localement une haute absorption de la lumière tout en évitant l'utilisation des nanotubes de carbone et/ou des particules de graphène.

A cette effet, l'invention concerne un procédé de dépôt sur un substrat d'un revêtement absorbant au moins partiellement la lumière visible pour la formation d'un article, tel qu'un composant horloger, ledit procédé de dépôt étant caractérisé en ce qu'il comporte :
- une première étape de fourniture d'un substrat ;
- une deuxième étape de dépôt d'une première couche recouvrant au moins une portion du substrat par l'application d'un premier mélange liquide comportant un liant, un solvant et des pigments d'une taille moyenne (d90) de dimension nanométrique, la première couche étant formée par évaporation dudit solvant ;

- une troisième étape de dépôt d'une deuxième couche recouvrant une première portion de la première couche par l'application d'un deuxième mélange liquide comportant un liant, un solvant et des pigments dont la taille moyenne (d90) est supérieure à la taille moyenne (d90) des pigments de la première couche, la deuxième couche étant formée par évaporation dudit solvant ;
- une quatrième étape de dépôt d'une troisième couche recouvrant une deuxième portion de la première couche, différente de la première portion recouverte par la deuxième couche, par l'application d'un troisième mélange liquide comportant un liant, un solvant et des pigments dont la taille moyenne (d90) est supérieure à la taille moyenne (d90) des pigments de la deuxième couche, la troisième couche étant formée par évaporation dudit solvant.

Selon l'invention, un des buts de l'invention est de proposer un procédé de dépôt d'un revêtement décoratif avec différents niveaux d'absorption de la lumière visible facile à mettre oeuvre et permettant d'obtenir des revêtements décoratifs avec une composante de clarté L* pouvant être localement inférieure à 20 avec des substrats de diverses natures.

Préférentiellement, la deuxième étape de dépôt d'une deuxième couche et/ou la troisième étape de dépôt d'une troisième couche comportent une sous-étape de positionnement d'un masque sélectif sur la première couche, avant l'application du mélange liquide correspondant, pour sélectionner au moins une portion de la première couche à recouvrir.

Préférentiellement, le premier mélange liquide formant la première couche du revêtement comporte entre 5 et 10% en masse de pigments.

Préférentiellement, le deuxième mélange liquide formant la deuxième couche et le troisième mélange liquide formant la troisième couche comportent respectivement entre 4 et 10% en masse de pigments, préférentiellement entre 4 et 8%, et entre 1 et 5% en masse de pigments, préférentiellement entre 1 et 4% en masse de pigments.

Préférentiellement, le procédé de dépôt comporte une cinquième étape de dépôt d'une quatrième couche recouvrant une troisième portion de la première couche, différente de la première portion recouverte par la deuxième couche et différente de la deuxième portion recouverte par la troisième couche, par l'application d'un quatrième mélange liquide comportant un liant, un solvant et des pigments dont la taille moyenne (d90) est supérieure à la taille moyenne (d90) des pigments de la troisième couche, la quatrième couche étant formée par évaporation dudit solvant.

Préférentiellement, le quatrième mélange liquide formant la quatrième couche comporte entre 0,5 et 5% en masse de pigments, plus préférentiellement entre 0,5 et 4%, et encore plus préférentiellement entre 0,5 et 1%.

Préférentiellement, les différentes couches du revêtement sont déposées par pulvérisation, par sprayage, par trempage, par sérigraphie, par impression ou encore par tampographie.

Préférentiellement, les différents mélanges liquides appliqués pour former les différentes couches du revêtement sont composés d'un liant, d'un solvant, de pigments, optionnellement d'un agent matifiant, de billes de verre et/ou d'un agent dispersant.

Préférentiellement, le liant est un polymère.

Préférentiellement, le liant est un acrylique, un polymère époxyde ou encore un polyuréthane.

Préférentiellement, les différents mélanges liquides appliqués pour former les différentes couches du revêtement sont des encres colorées.

L'invention concerne également un article comportant un substrat et un revêtement appliqué par le procédé selon l'invention.

Un tel article présente donc un revêtement de surface absorbant la lumière avec une composante de clarté L* est inférieure à 20.

Préférentiellement, l'article est un composant horloger.

L'invention a également pour objet une pièce d'horlogerie comportant un tel composant horloger.

### Brève description des figures

Les buts, avantages et caractéristiques de la présente invention apparaîtront à la lecture de la description détaillée ci-dessous faisant référence aux figures suivantes :
- la figure 1 illustre schématiquement une vue en coupe d'un article, tel qu'un composant horloger, comportant un substrat et un revêtement absorbant au moins partiellement la lumière visible selon l'invention ;
- la figure 2 illustre les principales étapes successives d'un exemple de réalisation d'un procédé de dépôt d'un revêtement absorbant au moins partiellement la lumière visible sur un substrat pour la réalisation d'un article, tel qu'un composant horloger, selon l'invention ;
- la figure 3 illustre un exemple de réalisation d'un article selon l'invention.

### Description détaillée de l'invention

Dans la présente description, les propriétés colorimétriques du revêtement absorbant la lumière obtenu selon le procédé de dépôt d'un revêtement selon l'invention sont exprimées à l'aide de l'espace colorimétrique CIE L*a*b* et mesurées selon le standard CIE 1976 sur des échantillons polis avec un spectrophotomètre KONICA MINOLTA CM-3610-A, avec les paramètres suivants : source d'éclairage CIE D65 (lumière du jour 6500°K), inclinaison de 10°, mesures SCI (réflexion spéculaire incluse), zone de mesure de 4 mm de diamètre.

Un espace colorimétrique CIELAB (conforme aux normes CIE n°15, ISO 7724/1, DIN 5033 Teil 7, ASTM E-1164) présente une composante de clarté L*, représentative de la manière dont le matériau réfléchit la lumière, assimilable à la clarté, avec une composante a* qui est la composante vert/rouge et une composante b* qui est la composante bleu/jaune.

Dans la présente demande, la taille moyenne des particules et des pigments est caractérisée par rapport à la valeur d90 d'une distribution granulométrique.

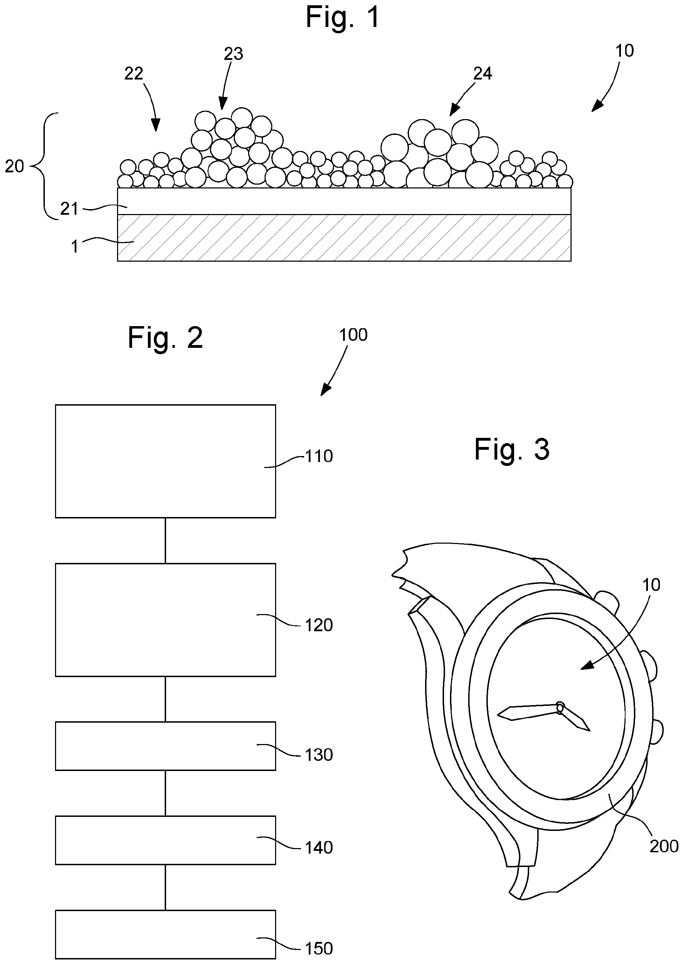

La figure 1 illustre schématiquement une vue en coupe d'un article 10, tel qu'un composant horloger, comportant un substrat 1 ainsi qu'un revêtement 20 décoratif et présentant des propriétés d'absorption de la lumière visible.

Le revêtement 20 recouvre au moins une portion du substrat 1. Un tel revêtement 20 selon l'invention forme une structure non uniforme composée de multizones à rugosité variable, les différentes zones du revêtement présentant des pigments avec différentes granulométries.

Préférentiellement, la densité des pigments entre les différentes zones du revêtement 20 est également variable, préférentiellement décroissante avec l'augmentation de la taille moyenne des pigments.

L'article 10 est par exemple un composant horloger, par exemple une platine, un pont, une roue, une vis, une masse oscillante, un cadran, un index, une applique, un disque de guichet, une aiguille ou encore tout autre composant ou organe d'un mouvement d'horlogerie ou d'un composant d'habillage d'une pièce d'horlogerie auquel on souhaite donner une impression de couleur profonde et intense, sans reflet de lumière, avec une composante de clarté L* inférieure à 20.

La figure 3 illustre une pièce d'horlogerie 200 comportant un article 10 selon l'invention. Dans cet exemple de réalisation, l'article 10 selon l'invention est un cadran.

Le substrat 1 peut être de nature variable, par exemple en matière métallique, en matière polymère ou encore en matière céramique, voire en matière composite.

Grâce au procédé selon l'invention, il est possible d'obtenir un article 10 avec un revêtement 20 dont la composante de clarté L* est inférieure à 20 avec des divers substrats. A titre de comparaison, un procédé de revêtement par un dépôt de dépôt physique en phase vapeur (PVD pour Physical Vapor Déposition) ne permet pas d'avoir un revêtement avec une composante de clarté L* inférieure à 20 en raison de la topologie des couches déposées. Avec un dépôt PVD, la composante de clarté L* d'un revêtement mat est comprise entre 25 et 30.

La structure multizone du revêtement 20 selon l'invention permet de créer des motifs en jouant sur différents niveaux d'absorption de la lumière visible. Préférentiellement, la structure multizone du revêtement 20 selon l'invention permet de créer des motifs monochromes avec différents niveaux d'absorption de la lumière visible.

Le revêtement 20 comporte une première couche 21 formant une couche de fond, configurée pour recouvrir le substrat 1, au moins sur une portion du substrat 1.

Préférentiellement, la première couche 21 recouvre totalement au moins une surface du substrat 1.

La première couche 21 présente une épaisseur suffisante pour que celle-ci soit homogène et opaque et que la perturbation optique du substrat 1 ne soit plus active. La première couche 21 présente par exemple une épaisseur égale ou supérieure à 1 µm et inférieure à 20 µm, et plus préférentiellement une épaisseur comprise entre 5 µm et 10 µm.

Préférentiellement, la première couche 21 est formée par le dépôt sur le substrat 1 d'un premier mélange liquide comportant un liant, des pigments, et un solvant.

Par exemple, la sous-couche est formée par le dépôt d'un premier mélange liquide constitué, en masse, de 30 à 40% de liant, de 50 à 60% de solvant et entre 5 et 10% de pigments.

Par exemple, la sous-couche est formée par le dépôt d'un premier mélange liquide constitué, en masse, de 30% de liant acrylique, de 60% de solvants et de 10% de pigments noir de carbone Emperor^{®} 1600.

Optionnellement, le premier mélange liquide peut comporter également un agent matifiant, par exemple une nanosilice, pour accentuer davantage l'intensité du revêtement 20.

Optionnellement, le premier mélange liquide peut comporter également un agent dispersant facilitant la mise en suspension des pigments dans le mélange liquide.

Préférentiellement, le liant du premier mélange liquide formant la première couche 21 est un polymère, par exemple un acrylique, un polymère époxyde ou encore un polyuréthane.

Par exemple, le premier mélange liquide est une encre colorée.

Par exemple, le premier mélange liquide est une encre noire présentant des pigments de noir de carbone.

Le premier mélange liquide est par exemple appliqué par pulvérisation, par sprayage, par trempage, par sérigraphie, par impression ou encore par tampographie sur le substrat 1.

Une fois le premier mélange liquide appliqué sur le substrat 1, le solvant s'évapore, le liant se rétracte autour des pigments créant ainsi la première couche 21 du revêtement 20.

Préférentiellement, les pigments de la première couche 21 présentent une taille moyenne (d90) de dimension nanométrique, par exemple comprise entre 20 et 120 nm, préférentiellement inférieure à 100 nm. Ainsi, la sous-couche 21 est une couche homogène et de faible rugosité.

La structure multizone du revêtement 20 est formée par une pluralité de couches juxtaposées qui recouvrent respectivement une portion délimitée de la première couche 21.

Comme représenté à la figure 1, la première couche 21 est recouverte par une deuxième couche 22 au niveau d'une première portion délimitée de la première couche 21. La deuxième couche présente des pigments dont la taille moyenne (d90) est supérieure à la taille moyenne (d90) des pigments de la première couche 21.

La première couche 21 est également recouverte par une troisième couche 23 au niveau d'une deuxième portion délimitée de la première couche 21, cette deuxième portion est différente de la première portion recouverte par la deuxième couche 22. Cette deuxième portion peut être juxtaposée ou non à la première portion.

La troisième couche 23 présente des pigments dont la taille moyenne (d90) est supérieure à la taille moyenne (d90) des pigments de la deuxième couche 22.

La première couche 21 peut également être recouverte par d'autres couches au niveau de différentes portions spécifiques de la première couche 21 de manière à créer un motif particulier avec des caractéristiques optiques particulières et des niveaux d'absorption de la lumière variable selon la taille des pigments utilisée.

A titre d'exemple, l'exemple de réalisation représenté à la figure 1 comporte une quatrième couche 24 déposée localement sur la première couche 21 au niveau d'une troisième portion délimitée. Cette troisième portion est différente de la première portion recouverte par la deuxième couche 22 et de la deuxième portion recouverte par la troisième couche 23. Cette troisième portion peut être juxtaposée à la première portion et/ou à la deuxième portion. En aucun cas, ces différentes couches appliquées sur la première couche 21 ne se superposent entre elles.

La quatrième couche 24 présente des pigments dont la taille moyenne (d90) est supérieure à la taille moyenne (d90) des pigments de la troisième couche 23.

A titre d'exemple, les pigments des couches 22, 23, 24 recouvrant la première couche 21 sont de dimensions micrométriques.

A titre d'exemple, la deuxième couche 22 comporte des pigments dont la taille moyenne (d90) est de taille micrométrique et inférieure à 20 µm, par exemple de l'ordre de 15 µm.

A titre d'exemple, la troisième couche 23 comporte des pigments dont la taille moyenne (d90) est comprise entre 20 µm et 100 µm, préférentiellement de l'ordre de 80 µm.

A titre d'exemple, la quatrième couche 24 comporte des pigments dont la taille moyenne (d90) est comprise entre 100 µm et 300 µm, préférentiellement de l'ordre de 250 µm.

Chaque couche 22, 23, 24 recouvrant partiellement la première couche 21 est formée respectivement par dépôt d'un mélange liquide au travers d'un ou d'une pluralité de masques appliqués sur la première couche 21 de manière à masquer certaines zones et à laisser apparaitre d'autres zones destinées à recevoir une couche avec une granulométrie prédéterminée.

Chaque couche 22, 23, 24 recouvrant partiellement la première couche 21 est formée respectivement par dépôt d'un mélange liquide comportant un liant, des pigments, et un solvant, la taille moyenne (d90) des pigments des différents mélanges liquides variant entre les différentes couches.

Chaque couche 22, 23, 24 recouvrant partiellement la première couche 21 est formée respectivement par dépôt d'un mélange liquide par pulvérisation, par sprayage, par trempage, par sérigraphie, par impression ou encore par tampographie.

Après application de chaque mélange sur la première couche 21, le solvant s'évapore pour permettre une polymérisation et une rétractation du liant autour des pigments formant ainsi les différentes couches avec des granulométries différentes.

Préférentiellement, le liant, la nature des pigments, et le solvant utilisés pour la formation des mélanges liquides en vue du dépôt des différentes couches 22, 23, 24 sont identiques.

Optionnellement, les mélanges liquides pour former les différentes couches du revêtement 20 peuvent comporter un agent matifiant, par exemple une nanosilice, pour accentuer davantage l'intensité du revêtement 20.

Optionnellement, les mélanges liquides pour former les différentes couches du revêtement 20 peuvent comporter un agent dispersant facilitant la mise en suspension des pigments dans le premier mélange liquide.

Optionnellement, les mélanges liquides pour former l'empilement 25 peuvent comporter des billes de verre pour augmenter davantage la rugosité de l'empilement.

Préférentiellement, le liant des mélanges liquides formant les différentes couches du revêtement 20 est un polymère, par exemple un acrylique, un polymère époxyde ou encore un polyuréthane.

Par exemple, les mélanges liquides formant les différentes couches du revêtement 20 sont des encres colorées, par exemple des encres noires comportant comme pigment du noir de carbone.

Préférentiellement, le liant, la nature des pigments, et le solvant utilisés pour la formation des différentes couches du revêtement 20 sont identiques.

Toutefois, les pigments utilisés pour la formation des différentes couches du revêtement 20 peuvent être de nature différente entre les différentes couches et par rapport aux pigments utilisés pour la réalisation de la première couche 21.

Préférentiellement, la proportion des pigments dans les mélanges liquides formant les différentes couches 22, 23, 24 déposées sur la première couche 21 est comprise entre 5% et 10% en masse. Préférentiellement, la proportion des pigments dans le mélange liquide est plus élevée lorsque la taille moyenne (d90) des pigments est plus faible.

Par exemple, la deuxième couche 22 est réalisée à partir d'un mélange liquide comportant entre 4 et 10% en masse de pigments, préférentiellement être 4 et 8% en masse.

Par exemple, la troisième couche 23 est réalisée à partir d'un mélange liquide comportant entre 1 et 5% en masse de pigments, préférentiellement être 1 et 5%.

Par exemple, la quatrième couche 24 est réalisée à partir d'un mélange liquide comportant entre 0,5 et 4% en masse de pigments, préférentiellement entre 0.5 et 1% en masse.

La figure 2 illustre les principales étapes du procédé de dépôt 100 d'un revêtement 20 absorbant au moins partiellement la lumière visible sur un substrat 1 selon l'invention.

Le procédé de dépôt 100 selon l'invention comporte une première étape 110 de fourniture d'un substrat 1.

Le procédé de dépôt 100 selon l'invention comporte une deuxième étape 120 de dépôt d'une première couche 21, dite couche de fond, recouvrant au moins une portion du substrat 1. Cette deuxième étape 120 de dépôt est réalisée par pulvérisation, par sprayage, par trempage, par sérigraphie, par impression ou encore par tampographie d'un premier mélange liquide comportant un liant, un solvant et entre 5 et 10% en masse de pigments d'une taille moyenne (d90) de dimension nanométrique, par exemple inférieure à 100 nm.

Cette première étape 120 de dépôt d'une première couche 21 comporte une sous étape d'évaporation du solvant du mélange liquide appliqué sur le substrat 1 de sorte que le liant se rétracte autour des pigments pour former une première couche 21 du revêtement 20.

Le procédé de dépôt 100 comporte également une troisième étape 130 de dépôt d'une deuxième couche 22 recouvrant une première portion de la première couche 21 précédemment déposée. Cette deuxième couche 22 présente une granulométrie différente de la première couche 21. Plus particulièrement, cette deuxième couche 22 présente des pigments dont la taille moyenne (d90) est supérieure à la taille moyenne d90 des pigments de la première couche 21.

Cette deuxième couche 22 est déposée par pulvérisation, par sprayage, par trempage, par sérigraphie, par impression ou encore par tampographie d'un deuxième mélange liquide comportant un liant, un solvant et entre 4 et 10% en masse de pigments.

Préférentiellement, le deuxième mélange liquide pour le dépôt de la deuxième couche 22 comporte entre 4 et 8% en masse de pigments.

Cette troisième étape 130 comporte une première sous-étape de positionnement d'un masque sur la première couche 21 de manière à sélectionner les zones de la première couche 21 à recouvrir par la deuxième couche 22.

Cette troisième étape 130 comporte une deuxième sous-étape d'évaporation du solvant du deuxième mélange liquide appliqué sur la première couche 21, de manière sélective, de sorte que le liant se rétracte autour des pigments pour former une deuxième couche 22 du revêtement 20, sur la première couche 21.

Le procédé de dépôt 100 comporte également une quatrième étape 140 de dépôt d'une troisième couche 23 recouvrant une deuxième portion de la première couche 21, qui est différente de la première portion sélectionnée pour recevoir la deuxième couche 22. Cette troisième couche 23 présente une granulométrie différente de la deuxième couche 22. Plus particulièrement, cette troisième couche 23 présente des pigments dont la taille moyenne (d90) est supérieure à la taille moyenne d90 des pigments de la deuxième couche 22.

Cette troisième couche 23 est également déposée par pulvérisation, par sprayage, par trempage, par sérigraphie, par impression ou encore par tampographie d'un troisième liquide comportant un liant, un solvant et entre 1 et 5% en masse des pigments.

Préférentiellement, le troisième mélange liquide pour le dépôt de la troisième couche 23 comporte entre 1 et 4% en masse de pigments.

Cette quatrième étape 140 comporte une première sous-étape de positionnement d'un masque sur la première couche 21 de manière à sélectionner les zones de la première couche 21 à recouvrir par la troisième couche 23.

Cette quatrième étape 140 comporte une deuxième sous-étape d'évaporation du solvant du troisième mélange liquide appliqué sur la première couche 21, de manière sélective, de sorte que le liant se rétracte autour des pigments pour former une troisième couche 23 du revêtement 20, sur la première couche 21.

Comme illustré à titre d'exemple, le procédé de dépôt 100 peut également comporter une cinquième étape 140 de dépôt d'une quatrième couche 24 recouvrant une troisième portion de la première couche 21, qui est différente des portions sélectionnées précédemment pour recevoir la deuxième couche 22 et la troisième couche 23. Cette quatrième couche 24 présente une granulométrie différente de la troisième couche 23. Plus particulièrement, cette quatrième couche 24 présente des pigments dont la taille moyenne (d90) est supérieure à la taille moyenne d90 des pigments de la troisième couche 22.

Cette quatrième couche 24 est également déposée par pulvérisation, par sprayage, par trempage, par sérigraphie, par impression ou encore par tampographie d'un quatrième liquide comportant un liant, un solvant et entre 0.5 et 5% en masse de pigments.

Préférentiellement, le quatrième mélange liquide pour le dépôt de la quatrième couche 24 comporte entre 0.5 et 4% en masse de pigments.

Cette cinquième étape 150 comporte une première sous-étape de positionnement d'un masque sur la première couche 21 de manière à sélectionner les zones de la première couche 21 à recouvrir par la quatrième couche 24.

Cette cinquième étape 150 comporte une deuxième sous-étape d'évaporation du solvant du quatrième mélange liquide appliqué sur la première couche 21, de manière sélective, de sorte que le liant se rétracte autour des pigments pour former une quatrième couche 24 du revêtement 20, sur la première couche 21.

Bien entendu, le procédé de dépôt 100 peut comprendre d'autres étapes de dépôt de couches supplémentaires en fonction des motifs désirés et des propriétés recherchées par le revêtement 20.

Selon un premier exemple de réalisation de l'invention, on utilise un substrat en laiton, par exemple pour la formation d'un cadran, sur lequel on vient appliquer un revêtement absorbant la lumière selon l'invention.

Le substrat en laiton présente par exemple une épaisseur de 0,27mm.

La première couche 21 est appliquée sur le substrat en laiton par trempage à partir d'un premier mélange liquide constitué de 2 g de résine polyuréthane (Berlacryl), de 0.5 g de pigments noir de carbone Emperor 1600 et 2.8 g de diluant Berlaflex. On laisse sécher la couche 20 minutes pour permettre l'évaporation du diluant.

La deuxième couche 22 est appliquée sur la première couche 21 au travers d'un premier masque sélectif par trempage à partir d'un deuxième mélange liquide constitué de 2 g de résine polyuréthane (Berlacryl), de 0,3 g de pigments Living Ink et 3,5 g de diluant Berlaflex. On laisse sécher la couche 20 minutes pour permettre l'évaporation du diluant.

La troisième couche 23 est appliquée sur la première couche 21 au travers d'un deuxième masque sélectif par trempage à partir d'un troisième mélange liquide constitué de 2 g de résine polyuréthane (Berlacryl), de 0,2 g de pigments Norit A ultra E153 et 4 g de diluant Berlaflex. On laisse sécher la couche 20 minutes pour permettre l'évaporation du diluant.

La quatrième couche 24 appliquée sur la première couche 21 au travers d'un troisième masque sélectif par trempage à partir d'un quatrième mélange liquide constitué de 2 g de résine polyuréthane (Berlacryl), de 0,2 g de pigments carbone Norit SX super E153, de 1,5 g de billes de verre 90-150 µm et 4 g de diluant Berlaflex. On laisse sécher la couche 20 minutes pour permettre l'évaporation du diluant.

Avec un tel revêtement, on obtient un cadran en laiton avec un revêtement de surface noir présentant une composante de clarté L* de 16.

## Revendications

1. Procédé de dépôt (100) sur un substrat (1) d'un revêtement (20) absorbant au moins partiellement la lumière visible pour la formation d'un article (10), tel qu'un composant horloger, ledit procédé de dépôt (100) étant **caractérisé en ce qu'**il comporte :
- une première étape (110) de fourniture d'un substrat (1) ;
- une deuxième étape (120) de dépôt d'une première couche (21) recouvrant au moins une portion du substrat (1) par l'application d'un premier mélange liquide comportant un liant, un solvant et des pigments d'une taille moyenne (d90) de dimension nanométrique, la première couche (21) étant formée par évaporation dudit solvant ;
- une troisième étape (130) de dépôt d'une deuxième couche (22) recouvrant une première portion de la première couche (21) par l'application d'un deuxième mélange liquide comportant un liant, un solvant et des pigments dont la taille moyenne (d90) est supérieure à la taille moyenne (d90) des pigments de la première couche (21), la deuxième couche (22) étant formée par évaporation dudit solvant ;
- une quatrième étape (140) de dépôt d'une troisième couche (23) recouvrant une deuxième portion de la première couche (21), différente de la première portion recouverte par la deuxième couche (23), par l'application d'un troisième mélange liquide comportant un liant, un solvant et des pigments dont la taille moyenne (d90) est supérieure à la taille moyenne (d90) des pigments de la deuxième couche (22), la troisième couche (23) étant formée par évaporation dudit solvant.

2. Procédé de dépôt (100) sur un substrat (1) d'un revêtement (20) absorbant au moins partiellement la lumière visible pour la formation d'un article (10) selon la revendication 1 **caractérisé en ce que** la deuxième étape (130) de dépôt d'une deuxième couche (22) et/ou la troisième étape (140) de dépôt d'une troisième couche (23) comportent une sous-étape de positionnement d'un masque sélectif sur la première couche (21), avant l'application du mélange liquide correspondant, pour sélectionner au moins une portion de la première couche (21) à recouvrir.

3. Procédé de dépôt (100) sur un substrat (1) d'un revêtement (20) absorbant au moins partiellement la lumière visible pour la formation d'un article (10), selon l'une des revendications précédentes **caractérisé en ce que** le premier mélange liquide formant la première couche (21) du revêtement (20) comporte entre 5 et 10% en masse de pigments.

4. Procédé de dépôt (100) sur un substrat (1) d'un revêtement (20) absorbant au moins partiellement la lumière visible pour la formation d'un article (10), selon l'une des revendications précédentes **caractérisé en ce que** le deuxième mélange liquide formant la deuxième couche (22) comporte, en masse, entre 4 et 10% de pigments.

5. Procédé de dépôt (100) sur un substrat (1) d'un revêtement (20) absorbant au moins partiellement la lumière visible pour la formation d'un article (10), selon l'une des revendications précédentes **caractérisé en ce que** le troisième mélange liquide formant la troisième couche (23) comporte entre 1 et 5% en masse de pigments.

6. Procédé de dépôt (100) sur un substrat (1) d'un revêtement (20) absorbant au moins partiellement la lumière visible pour la formation d'un article (10) selon l'une des revendications précédentes **caractérisé en ce que** le procédé de dépôt (100) comporte une cinquième étape (150) de dépôt d'une quatrième couche (24) recouvrant une troisième portion de la première couche (21), différente de la première portion recouverte par la deuxième couche (23) et différente de la deuxième portion recouverte par la troisième couche (23), par l'application d'un quatrième mélange liquide comportant un liant, un solvant et des pigments dont la taille moyenne (d90) est supérieure à la taille moyenne (d90) des pigments de la troisième couche (23), la quatrième couche (24) étant formée par évaporation dudit solvant.

7. Procédé de dépôt (100) sur un substrat (1) d'un revêtement (20) absorbant au moins partiellement la lumière visible pour la formation d'un article (10), selon la revendication 6 **caractérisé en ce que** le quatrième mélange liquide formant la quatrième couche (24) comporte entre 0.5 et 5% en masse de pigments.

8. Procédé de dépôt (100) sur un substrat (1) d'un revêtement (20) absorbant au moins partiellement la lumière visible pour la formation d'un article (10), selon l'une des revendications précédentes **caractérisé en ce que** les différentes couches (21, 22, 23, 24) du revêtement (20) sont déposées par pulvérisation, par sprayage, par trempage, par sérigraphie, par impression ou encore par tampographie.

9. Procédé de dépôt (100) sur un substrat (1) d'un revêtement (20) absorbant au moins partiellement la lumière visible pour la formation d'un article (10), selon l'une des revendications précédentes **caractérisé en ce que** les différents mélanges liquides appliqués pour former les différentes couches (21, 22, 23, 24) du revêtement (20) sont composés d'un liant, d'un solvant, de pigments, optionnellement d'un agent matifiant, de billes de verre et/ou d'un agent dispersant.

10. Procédé de dépôt (100) sur un substrat (1) d'un revêtement (20) absorbant au moins partiellement la lumière visible pour la formation d'un article (10), selon la revendication précédente **caractérisé en ce que** le liant est un polymère.

11. Procédé de dépôt (100) sur un substrat (1) d'un revêtement (20) absorbant au moins partiellement la lumière visible pour la formation d'un article (10), selon la revendication précédente **caractérisé en ce que** le liant est un acrylique, un polymère époxyde ou encore un polyuréthane.

12. Procédé de dépôt (100) sur un substrat (1) d'un revêtement (20) absorbant au moins partiellement la lumière visible pour la formation d'un article (10), selon l'une des revendications précédentes **caractérisé en ce que** les différents mélanges liquides appliqués pour former les différentes couches (21, 22, 23, 24) du revêtement (20) sont des encres colorées.

13. Article (10) **caractérisé en ce qu'**il comporte un substrat (1) et un revêtement (20) absorbant au moins partiellement la lumière visible, déposée par le procédé de dépôt selon l'une des revendications 1 à 12, le revêtement (20) présentant une composante de clarté L* inférieure à 20.

14. Article (10) selon la revendication précédente **caractérisé en ce que** l'article (20) est un composant horloger.

15. Pièce d'horlogerie (200) comportant un composant horloger (10) selon la revendication précédente.
